**Europäisches Patentamt**

**European Patent Office**

**Office européen des brevets**

(19)

(11) Numéro de publication : **0 334 752 B1**

(12) # FASCICULE DE BREVET EUROPEEN

(45) Date de publication du fascicule du brevet :
**20.05.92 Bulletin 92/21**

(51) Int. Cl.$^5$ : **G01V 1/147,** G01V 1/40

(21) Numéro de dépôt : **89400794.7**

(22) Date de dépôt : **21.03.89**

(54) **Dispositif perfectionné pour engendrer des ondes acoustiques par percussion d'une masse chutant sur un élément-cible coupléavec les parois d'un puits.**

(30) Priorité : **25.03.88 FR 8804058**

(43) Date de publication de la demande :
**27.09.89 Bulletin 89/39**

(45) Mention de la délivrance du brevet :
**20.05.92 Bulletin 92/21**

(84) Etats contractants désignés :
**DE GB IT NL**

(56) Documents cités :
**EP-A- 0 151 060**
**EP-A- 0 242 262**
**US-A- 3 277 977**

(73) Titulaire : **INSTITUT FRANCAIS DU PETROLE**
**4, Avenue de Bois Préau**
**F-92502 Rueil-Malmaison (FR)**

(72) Inventeur : **Meynier, Patrick**
**23 bis, rue des Garennes**
**F-78400 Chatou (FR)**

EP 0 334 752 B1

## Description

La présente invention a pour objet un dispositif perfectionné, adapté à être descendu dans un puits ou forage à l'extrémité d'un câble, pour engendrer des ondes acoustiques par percussion d'une masse chutant sur un élément-cible couplé avec la paroi du puits.

Le dispositif selon l'invention trouve ses applications notamment dans le domaine de la prospection sismique.

On connait un dispositif pour engendrer des impulsions sismiques par percussion d'une masse sur un élément-cible ancré dans un forage. L'élément-cible est solidaire d'un corps allongé qui est pourvu de moyens d'ancrage. La masse est déplaçable à l'intérieur du corps entre une position basse en contact avec l'élément-cible et une position haute d'où sa chute est déclenchée par action de moyens de manoeuvre. Ces moyens comportent un élément à crochets escamotables susceptible de venir saisir une pièce d'accrochage solidaire de la masse et des éléments de traction rigides (une tige ou train de tiges interconnectées) reliés à des moyens de levage disposés à l'extérieur du puits. Les moyens d'ancrage sont du type "packer" bien connu des spécialistes et comportent un organe expansible constitué d'une partie périphérique déplaçable radialement et d'une partie centrale. L'expansion est obtenue en faisant tourner les deux parties l'une par rapport à l'autre par une rotation du train de tiges depuis la surface. La partie périphérique peut être constituée de bras pivotants munis de griffes qui, en s'ouvrant, viennent s'ancrer dans la paroi du puits, ou bien encore d'une enceinte déformable.

Un tel dispositif est décrit dans la demande de brevet français publiée 2 590 994. Par une autre demande de brevet européen publiée EP 242262, on connait un autre dispositif adapté à engendrer aussi des ondes sismiques dans un forage par percussion d'une masse chutant à l'intérieur d'un corps allongé vers un élément-cible ancré, qui est pourvu d'un système de réarmement venant lever la masse par dessous et la translater vers sa position de déclenchement.

Ce système comporte une tige filetée disposée dans l'axe longitudinal du corps et un écrou bloqué en rotation qui se visse sur celle-ci. L'écrou est disposé sous la masse. La mise en rotation de la tige filetée dans un certain sens déplace l'écrou qui entraine la masse vers une position haute où elle vient se bloquer dans une encoche d'une barre d'accrochage disposée dans le corps suivant une génératrice de celui-ci. En changeant ensuite le sens de rotation de la tige filetée, on ramène l'écrou vers une position basse où il vient écarter latéralement la barre d'accrochage et libérer la masse. La tige filetée est entrainée depuis la surface par un train de tiges rigides ou bien par un moteur électrique disposé au-dessus du corps et alimenté depuis la surface par un câble électro-porteur.

L'emploi d'un train de tiges rigides permet d'appliquer une force de traction considérable et donc de réarmer une source de puits jusqu'à de très grandes profondeurs même dans des puits fortement déviés. Mais du fait de la liaison rigide existant en permanence avec la surface, une certaine partie de l'énergie des ébranlements produits se transmet le long du puits et donne lieu à des émissions parasites qui viennent perturber un peu la réception des échos utiles correspondant aux ondes transmises directement aux parois à la profondeur d'ancrage de la source de puits.

Le réarmement d'une source sismique à chute de poids au moyen de moteurs électriques alimentés depuis la surface par un câble electro-porteur tel qu'il est décrit dans le second document cité, permet de s'affranchir des inconvénients d'une liaison rigide. Le câble électro-porteur pouvant être relâché avant le déclenchement de la source, l'énergie des chocs n'est pas transmise le long du puits par son intermédiaire. Mais la puissance électrique relativement faible que peuvent transmettre les câbles généralement utilisés dans les puits, vient limiter les capacités d'une telle source. Quand la hauteur de chûte requise pour obtenir des impacts puissants, est importante, le temps nécessaire aux réarmement est allongé, ce qui diminue la cadence possible des "tirs" sismiques. Si les intervalles de temps de réarmement sont imposés, il faut nécessairement réduire la hauteur de chute et donc la puissance de la source sismique.

Le dispositif perfectionné selon l'invention permet d'éviter les inconvénients ci-dessus mentionnés. Il est adapté a être descendu dans un puits à l'extrémité d'un élément de liaison, pour engendrer des ondes acoustiques par percussion d'une masse chutant sur un élément-cible couplé avec la paroi du puits. Il comporte un corps allongé creux auquel est fixé l'élément-cible par intermittence avec la paroi du puits, des moyens de réarmement comportant un élément-support disposé sous la masse et dont la translation entre une position basse et une position haute permet de soulever la masse depuis sa position d'impact jusqu'à sa position d'armement, et des moyens de retenue déplaçables pour maintenir la masse dans sa position d'armement.

Il est caractérisé en ce qu'il comporte un câble souple pour relier l'élément-support à des moyens moteurs disposés hors du puits, des moyens pour verrouiller l'élément-support en position basse, un élément-poussoir adapté à être poussé longitudinalement quand l'élément-support est au voisinage de sa position basse et des moyens pour coupler le déplacement du piston de commande sous la poussée de l'élément-support et celui des moyens de retenue, de manière à déclencher la chute de la masse.

Le dispositif peut comporter un élément-poussoir actionnant un piston de commande qui est associé à un circuit hydraulique de couplage avec les moyens de retenue ou bien encore actionnant un commutateur, lequel est associé à des moyens de retenue à commande électrique ou électro-magnétique.

Le dispositif peut comporter aussi un élément intermédiaire disposé entre la masse et l'élément-support et suivant celui-ci dans ses déplacements longitudinaux, cet élément intermédiaire recevant les impacts de la masse et les transmettant au corps du dispositif.

Avec un tel agencement et en utilisant des câbles électro-porteurs disponibles sur le marché, il est possible d'exercer une force de plusieurs dizaines de kilo-Newton (kN) ce qui, même en tenant compte de la pression hydrostatique à vaincre, permet d'élever rapidement de plusieurs mètres une masse importante.

On obtient donc une source sismique puissante pouvant fonctionner avec une fréquence de répétition élevée. De plus, la transmission à la masse d'énergie potentielle étant effectuée au moyen d'un câble souple qui peut être relâché à chaque fois que la masse est hissée en position de déclenchement, il ne se produit aucun rayonnement d'énergie parasite le long du câble. On peut noter également que l'élément-support pouvant être verrouillé en position basse pour laquelle la source sismique a un encombrement minimal, les manoeuvres de celle-ci notamment durant les phases d'introduction ou d'extraction et aussi de déplacement le long du puits, s'en trouvent facilitées.

Il faut ajouter encore que les moyens moteurs pour déplacer la source dans le puits sont ceux employés généralement pour des opérations de diagraphie. On évite ainsi l'utilisation d'équipements de forage plus lourds et plus onéreux.

D'autres caractéristiques et avantages du dispositif selon l'invention apparaîtront à la lecture de la description d'un mode de réalisation donné à titre d'exemple non limitatif, en se reportant aux dessins annexés où :

– la figure 1 montre schématiquement en coupe le dispositif dans sa position ramassée durant les manoeuvres de déplacement le long d'un puits;

– la figure 2 montre schématiquement en coupe le dispositif ancré dans un puits alors que la masse est hissée vers sa position d'armement;

– la figure 3 montre schématiquement en coupe le dispositif dans sa position d'armement, l'élément-support étant ramené vers sa position basse;

– la figure 4 montre schématiquement en coupe le dispositif après son déclenchement, la masse chutant vers sa position d'impact; et

– la figure 5 montre schématiquement une variante des moyens de retenue de la masse en position haute comportant des éléments d'amortissement en fin de course de réarmement.

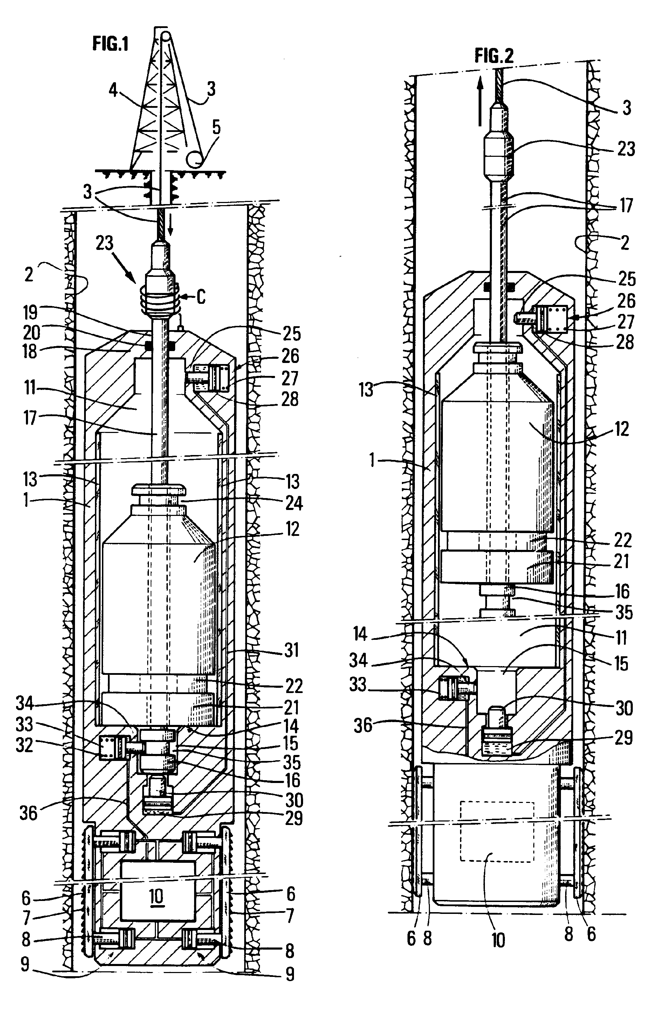

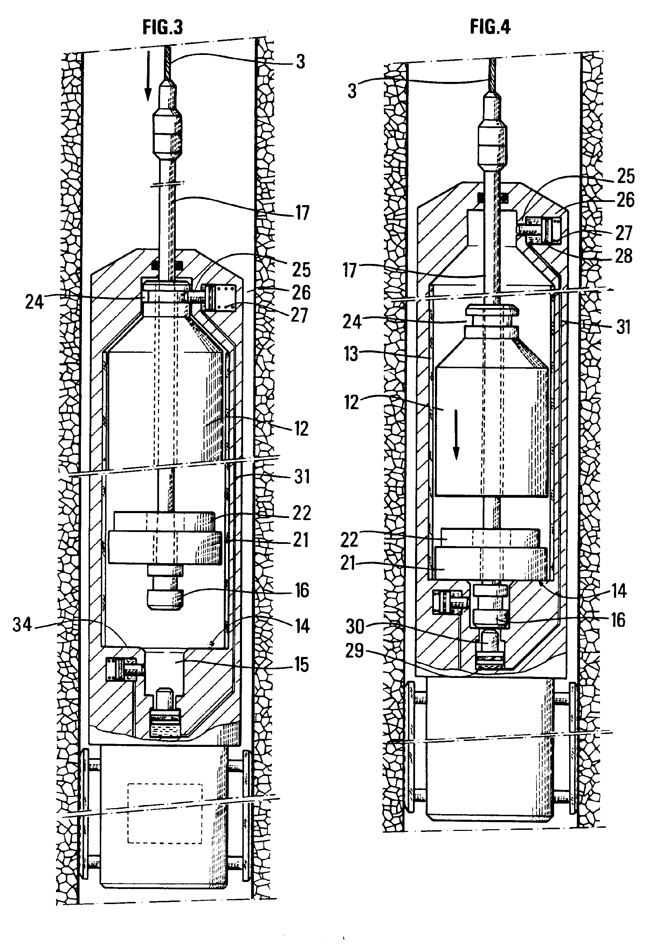

Le dispositif représenté aux figures 1, 4 comporte un corps allongé 1 adapté à être descendu dans un puits ou forage 2 à l'extrémité d'un câble 3 relié à une installation de surface. Celle-ci comporte un mât de support 4 et un touret 5 pour le stockage du câble 3 et des moyens moteurs (non représentés) pour enrouler ou dérouler le câble et déplacer ainsi le dispositif dans le puits 2.

A sa partie inférieure, le corps 1 comporte des moyens d'ancrage constitués de plusieurs patins 6 déplaçables d'une position de retrait (fig. 1) à une position d'ancrage (fig. 2 par exemple) où ils sont appliqués contre les parois du puits 2. Pour améliorer le couplage du dispositif avec les formations géologiques environnantes, les faces d'application des différents patins sont pourvues d'éléments saillants 7. On peut utiliser par exemple quatre patins répartis autour du corps à 90° les uns des autres ou bien encore trois patins disposés à 120° les uns des autres. Les patins 6 sont fixés à des tiges 8 déplacées radialement par des vérins hydrauliques 9 mûs par un système hydraulique (non représenté) logé dans une cavité 10 du corps. Un tel système hydraulique est décrit par exemple dans le brevet européen publié EP 162767 et comporte au moins un accumulateur oléo-pneumatique chargé à une pression élevée et des électro-vannes pour distribuer le liquide sous pression dans les vérins 9 de manière à écarter ou rapprocher les patins 6.

Des conducteurs électriques non représentés pour simplifier les dessins, raccordent les circuits de commande des électo-vannes à des lignes d'alimentation électrique courant tout le long du câble 3. Un opérateur peut ainsi commander l'écartement ou le retrait des patins 6.

Le dispositif comporte une chambre intérieure 11 où une masse 12 peut coulisser entre une position d'armement (fig. 3) et une position d'impact (fig. 1). Des glissières 13 disposées suivant des génératrices du corps 1, guident le déplacement de la masse 42. Une paroi terminale 14 de la chambre 11, du côté de la position d'impact de la masse, comporte un évidement axial 15 de dimensions appropriées pour contenir totalement un élément-support 16. A celui-ci est fixée une tige rigide 17 de longueur supérieure à celle de la chambre intérieure 11, qui traverse la paroi terminale 18 du corps opposée à la paroi 14, par une ouverture 19. Des joints d'étanchéité 20 sont disposés dans l'ouverture 19 autour de la tige 17 pour isoler du puits la chambre intérieure 11. La masse 12 comporte un évidement central de section adaptée à celle de la tige 17 mais inférieure à celle de l'élément-support 16. Un élément-cible ou enclume 21 indépendant de la masse 12 et pourvu également d'un évidement central pour le passage de la tige 17, est disposé entre la masse 12 et la paroi terminale 14.

Pour limiter la force des impacts entre la masse 12 et l'élément-cible 21, on fixe de préférence sur celui-ci un disque réalisé en un matériau amortisseur 22 tel que du polyuréthane par exemple. Un connecteur 23 permet le raccordement de la tige 17 au câble 3. L'utilisation d'un élément-cible indépendant du corps permet de le changer plus facilement lorsqu'il finit par être endommagé par les impacts successifs.

La masse 12, du côté de son extrémité le plus proche de la paroi terminale 14, est pourvue d'une rainure 24. Au niveau de la rainure 24 dans la position dite d'armement de la masse, est disposé un moyen de blocage. Ce moyen comporte par exemple au moins un doigt 25 déplaçable radialement par rapport au corps entre une première position où il est engagé dans la rainure 24 et maintient la masse, et une position où il est suffisamment effacé pour permettre sa chute.

Le doigt 25 est constitué par exemple par la tige d'un vérin hydraulique 26 logé dans la paroi latérale du corps 1. Un ressort 27 en appui contre le piston 28 du vérin 26, pousse le doigt 25 en position d'extension.

Au fond de l'évidement 15, s'ouvre une cavité 29 pour un élément-poussoir ou piston de commande 30. La cavité 29 et celle du vérin hydraulique 26, du côté opposé au ressort 27, communiquent par l'intermédiaire d'une canalisation remplie d'huile 31. L'élément-poussoir 30 peut se déplacer d'une position de retrait (fig. 1 ou 4 par exemple) à une position plus avancée (fig. 2 ou 3). Cette position avancée est déterminée de manière que l'élément-support 16 au voisinage de sa position le plus basse où il rentre entièrement dans l'évidement 15, vienne presser sur l'élément-poussoir 30 et le déplacer suffisamment pour provoquer un recul concomitant du doigt de blocage 25 et une libération de la masse 12.

Dans la cavité 15, est disposé un moyen de blocage pour l'élément-support 16 analogue à celui qui retient la masse en position d'armement. En position de repos, un ressort 32 dans un logement 33 pousse un doigt de blocage 34 hors de la paroi de la cavité 15 suffisamment pour qu'il vienne s'engager dans une rainure 35 de l'élément-support 16. Le dégagement de celui-ci est assuré en exerçant une contre-pression hydraulique au moyen d'un circuit 36 communiquant avec le système hydraulique dans la cavité 10. De la même façon que les vérins 9 des patins d'ancrage 6, le retrait du doigt de blocage 34 est télécommandé par un opérateur depuis la surface.

Les différents signaux de télécommande permettant l'ancrage des patins et le déverrouillage de l'élément-support 16, sont transmis par l'intermédiaire des conducteurs électriques du câble 3 jusqu'au connecteur 23 où ils sont reliés électriquement à une première extrémité d'un câble multi-conducteurs C enroulé en spirale. A L'extrémité opposée du câble C, les conducteurs électriques se raccordent à d'autres conducteurs (non représentés) courant tout le long du corps 1 jusqu'au compartiment 10 à sa partie inférieure. La longueur du câble C est choisie pour permettre un libre mouvement de la tige 17.

A titre purement indicatif, on peut réaliser par exemple un dispositif comportant une masse d'une centaine de kg et un corps suffisamment long pour permettre une chute de l'ordre de 4 m. On le suspend à un câble porteur du type utilisé généralement pour les outils de puits, qui permet d'exercer par exemple un effort de 20 kN et plus, qui est suffisant pour remonter rapidement la masse après chaque chute vers sa position de réarmement. L'énergie transmise ainsi par traction est bien supérieure au débit électrique d'un câble qui est de l'ordre de 1 kW.

Le dispositif fonctionne de la manière suivante :

a) Dans la position qu'il occupe au moment de ses déplacements dans un puits et qui est représentée à la figure 1, l'élément-support 16 est au fond de l'évidement 15 appuyé contre l'élément-poussoir 30, la contre-pression hydraulique est relâchée dans la canalisation 36 de manière que le doigt 34 vienne se bloquer dans la rainure 35, et les patins d'ancrage 12 sont en position de retrait.

b) Arrivé à une profondeur d'utilisation, l'opérateur en surface télécommande l'écartement des patins 6 et leur ancrage contre les parois du puits et ensuite le recul du doigt de blocage 34 par l'action de la contre-pression hydraulique de manière à libérer l'élément-support 16.

c) Une traction est alors exercée sur le câble 3 depuis la surface de manière à faire coulisser vers le haut l'ensemble de l'élément-support 16 de l'élément-cible 21 muni de son disque amortisseur 22 et de la masse 12 (fig. 2). Le relâchement de l'élément-poussoir 30 fait saillir le doigt de blocage 25 hors de la paroi du corps sous la poussée du ressort 27.

d) Lorsque la masse a atteint sa position d'armement (fig. 3), le doigt de blocage 25 vient s'engager dans la rainure 24 et l'immobilise. On détend alors le câble 3 de manière à laisser l'élément-support 16 revenir vers sa position basse. L'élément-cible 21 qui l'accompagne dans son mouvement, arrive au contact de la paroi terminale 14 du corps.

e) L'élément-support étant rentré complètement dans l'évidement 15 vient alors appuyer contre l'élément-poussoir 30, ce qui a pour effet de rétracter le doigt de blocage 25 et de libérer la masse 12 (fig. 4). Elle chute alors et vient frapper le disque 22 de l'élément-cible 21. L'impulsion acoustique créée au moment de l'impact, est transmise aux formations géologiques environnantes par l'intermédiaire du corps 1 et des patins d'ancrage 6.

Chaque aller et retour de l'élément-support 16 suffit à déclencher un nouveau "tir" sismique.

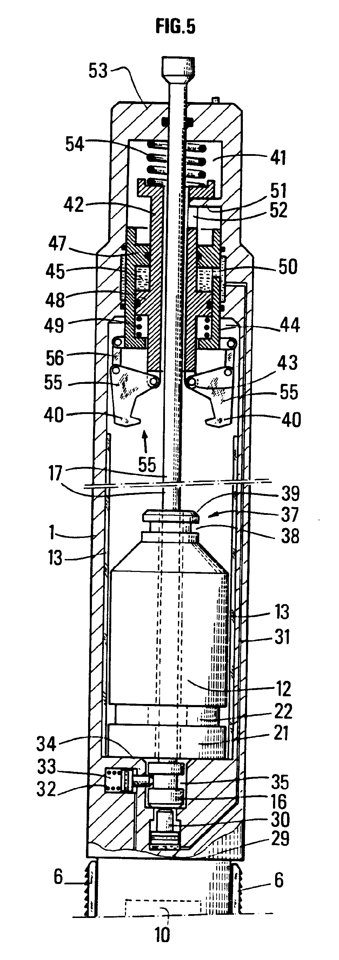

Suivant le mode de réalisation de la figure 5, la masse comporte une tête d'accrochage 37 du côté opposé à l'élément-cible, pourvue d'une rainure circulaire 38 et d'une paroi terminale tronconique 39. Les moyens de retenue de la masse en position d'armement comportent au moins deux crochets 40 disposés symétriquement de part et d'autre de la tige axiale 17. Les crochets peuvent pivoter entre une position de rapprochement où ils sont susceptibles de venir s'engager dans la rainure circulaire 38 en bloquant la masse en position d'armement, et une position d'écartement où toute retenue cesse.

Les moyens de commande permettant l'écartement des crochets et la libération de la masse, sont disposés en partie dans une cavité axiale 41 prolongeant la chambre intérieure 11. Ils comportent un manchon cylindrique 42 adapté à coulisser autour de la tige 11. Les crochets 40 peuvent pivoter sur des axes 43 fixés à une première extrémité du manchon. Une pièce cylindrique 44 de section supérieure à celle du manchon, est engagée partiellement dans la cavité axiale 41. Elle est pourvue d'une cavité intérieure 45. Le manchon 42 traverse la pièce cylindrique 44 et deux ouvertures, pratiquées dans les parois terminales 46 et 47 de celle-ci, assurent son guidage en translation.

Le manchon 42 est pourvu extérieurement d'un piston 48 de section adaptée à la section intérieure de la pièce cylindrique 44. Un ressort 49 est disposé entre le piston 48 et la paroi 46 du côté de la chambre 11. La partie opposée de la cavité 45 contient un liquide hydraulique et communique par un orifice latéral 50 de celle-ci avec la canalisation 31 (cf. fig. 1-3);

Une clavette 51 solidaire de la paroi du corps 1, est engagée dans une rainure axiale 52 du manchon, empêche la rotation de celui-ci. Entre l'extrémité du manchon 42 et le fond 53 de la cavité 39, est disposé un ressort de rappel 54.

Les crochets comportent chacun une partie coudée 55 dont l'extrémité est reliée par une biellette 56, à la pièce cylindrique fixe 44. La forme des crochets 40 est telle qu'un coulissement du piston 48 vers la paroi 46, a pour effet de les écarter l'un de l'autre. La force nécessaire pour provoquer ce coulissement et en même temps la compression du ressort 49, est fournie par le liquide hydraulique lorsqu'il est comprimé par le recul de l'élément-poussoir 30 (cf. fig. 1) sous la poussée de l'élément-support 16 de retour à sa position basse.

Le fonctionnement des moyens de retenue est sensiblement identique à celui du doigt 25 dans le mode de réalisation précédent. La remontée de la masse obtenue par une traction sur le câble 3, dégage l'élément-poussoir 30 (fig. 1) et le manchon 42 remonte sous la poussée du ressort 49, ce qui referme les crochets 40. La masse 12 arrivant en position de réarmement (fig. 3), les crochets 40 s'écartent pour venir s'enclencher sur la tête 37 de la masse 12. De même, la pression exercée sur l'élément-poussoir 30 par le retour de l'élément-support 16 a pour effet de translater le manchon 42 vers le bas et d'ouvrir les crochets 40.

Si le mouvement de recul se poursuit au-delà de la position d'armement de la masse, le manchon 42 est entraîné vers le fond de la cavité 41, ce qui comprime le ressort de rappel 54. On évite ainsi les dommages que pourrait causer une traction trop forte sur le câble 3 (fig. 1).

On ne sortirait pas du cadre de l'invention en remplaçant le circuit hydraulique permettant la transmission du mouvement de l'élément-poussoir 30 (fig. 1) au doigt 25 de retenue de la masse 12 ou au manchon coulissant 42 (fig. 5), par toute autre moyen équivalent et notamment par un circuit de commande comportant par exemple des moyens électro-magnétiques pour déplacer les moyens de retenue. On ne sortirait pas non plus du cadre de l'invention en prolongeant le manchon coulissant 42 (fig. 5) de manière qu'en position de repos il soit en saillie par rapport à la paroi supérieure du corps, et en fixant à la tige rigide 17 un élément capable de venir appuyer sur ce prolongement extérieur au voisinage de la position basse de l'élément-support et d'écarter les crochets 40.

## Revendications

1. Dispositif perfectionné adapté à être descendu dans un puits à l'extrémité d'un élément de liaison, pour engendrer des ondes acoustiques par percussion d'une masse (12) chutant sur un élément-cible (21) couplé avec la paroi du puits, comportant un corps allongé (1) pourvu d'une chambre longitudinale (11), où la masse peut se déplacer entre une position d'armement et une position d'impact, des moyens d'ancrage escamotables (6, 9) pour coupler l'élément-cible par intermittence avec la paroi du puits, des moyens de réarmement comportant un élément-support (16) disposé sous la masse (12) et dont la translation entre une position basse et une position haute permet de soulever la masse depuis sa position d'impact jusqu'à sa position d'armement, et des moyens de retenue (25, 26) déplaçables pour maintenir la masse dans sa position d'armement, caractérisé en ce qu'il comporte un câble souple (3) pour relier l'élément-support (16) à des moyens moteurs (5) disposés hors du puits, des moyens (32-36) pour verrouiller l'élément-support en position basse, un élément-poussoir (30) adapté à être poussé longitudinalement quand l'élément-support (16) est au voisinage de sa position basse et des moyens pour coupler le déplacement de l'élément-poussoir (30) sous la poussée de l'élément-support (16) et celui des moyens de retenue (25, 26), de manière à déclencher la chute de la masse.

2. Dispositif selon la revendication 1, caractérisé en ce que l'élément poussoir actionne un piston de commande (30) lequel est associé à un circuit hydraulique (31) de couplage avec les moyens de retenue (25, 26).

3. Dispositif selon la revendication 1, caractérisé en ce que l'élément-poussoir actionne un commutateur, lequel est associé à des moyens de retenue à commande électrique ou électro-magnétique.

4. Dispositif selon la revendication 1, caractérisé en ce que l'élément-cible (21) est disposé entre la masse (12) et l'élément-support (16) et peut suivre celui-ci dans ses déplacements longitudinaux, ledit élément-cible étant en appui contre une paroi terminale (14) de la chambre intérieure du corps dans la position basse de l'élément-support (16), un évidement (15) ménagé dans ladite paroi terminale (14), pour contenir l'élément-support et les moyens de verrouillage (32-36) de celui-ci, l'élément-poussoir (30) étant déplaçable dans une cavité (29) au fond dudit évidement.

5. Dispositif selon la revendication 4, caractérisé en ce que ledit élément-cible comporte un disque (22) réalisé en un matériau amortisseur de chocs contre sa face en regard de la masse.

6. Dispositif selon la revendication 5, caractérisé en ce que l'élément-support (16) est fixé à une tige rigide (17) qui se raccorde au câble souple (3) à l'extérieur du corps (1).

7. Dispositif selon la revendication 1, caractérisé en ce que les moyens de verrouillage de l'élément-support en position basse comportent une tige (34) pouvant être engagée dans une rainure latérale (35) de l'élément-support (16) par action d'un ressort (32) et des moyens hydrauliques, commandés par l'intermédiaire du câble (3), pour exercer une contre-pression de manière à dégager la tige de ladite rainure latérale (35).

8. Dispositif selon la revendication 6, caractérisé en ce que la tige rigide (17) est disposée suivant l'axe du corps (1), la masse (12) et l'élément-cible (21) étant pourvus d'un évidement central pour le passage de la tige.

9. Dispositif selon la revendication 1, caractérisé en ce que les moyens de retenue de la masse (12) en position d'armement comportent un organe mobile (25) à coulissement radial et des moyens commandés par l'élément-poussoir (30) pour déplacer l'organe mobile entre une position d'engagement contre la masse et une position de dégagement.

10. Dispositif selon la revendication 1, caractérisé en ce que les moyens de retenue de la masse (12) en position d'armement comportent des crochets pivotants (40) disposés dans la chambre longitudinale (11) et adaptés à retenir la masse en position d'armement et des moyens (42-44) pour écarter lesdits crochets et libérer la masse, disposés axialement au-dessus de ladite position d'armement de la masse.

11. Dispositif selon les revendications 6 et 10, caractérisé en ce que les moyens pour écarter lesdits crochets (40) comportent un élément fixé à la tige (17) et disposé de manière à appuyer sur l'élément-poussoir (30) quand l'élément-support (16) est au voisinage de sa position basse.

12. Dispositif selon l'une des revendications précédentes, caractérisé en ce que les moyens d'ancrage escamotables comportent au moins un patin (6) dont la face de contact avec la paroi est pourvue d'éléments-saillants (7), et des moyens hydrauliques (9) pour déplacer chaque patin d'ancrage.

**Patentansprüche**

1. Verbesserte Vorrichtung einer Auslegung derart, daß sie in ein Bohrloch am Ende eines Verbindungselements herabgelassen werden kann, um akustische Wellen durch Perkussion einer Masse (12) zu erzeugen, die auf ein mit der Wandung des Bohrlochs gekoppeltes Targetelement (21) fällt, mit einem länglichen mit einer Longitudinalkammer (11) versehenen Körper (1), wo die Masse sich zwischen einer Ladestellung und einer Aufschlagstellung verschieben kann, eindrückbaren Verankerungsmitteln (6, 9), um das Targetelement intermittierend mit der Bohrlochwand zu koppeln, Nachlademitteln mit einem Trägerelement (16), das unter der Masse (12) angeordnet ist und dessen Translation zwischen einer unteren Stellung und einer oberen Stellung es ermöglicht, die Masse aus ihrer Aufschlagstellung in ihre Ladestellung anzuheben und Rückhaltemitteln (25, 26), die bewegbar bzw. verschiebbar sind, um die Masse in ihrer Ladestellung zu halten, dadurch gekennzeichnet, daß sie ein nachgiebiges Kabel (3) umfaßt, um das Trägerelement (16) mit außerhalb des Bohrlochs angeordneten Antriebsmitteln (5) zu verbinden, Mitteln (32-36) zum Verriegeln des Trägerelements in unterer Stellung, einem Stößelelement (30) einer Ausbildung derart, daß es in Längsrichtung beaufschlagt werden kann, wenn das Trägerelement (16) sich benachbart seiner unteren Stellung befindet und Mitteln, um die Bewegung des Stößelelements (30) unter dem Schub des Trägerelements (16) und die der Rückhaltemittel (25, 26) derart zu koppeln, daß der Fall der Masse ausgelöst wird.

2. Vorrichtung nach Anspruch 1, dadurch gekennzeichnet, daß das Stößelelement einen Steuerkolben (30) betätigt, der einem hydraulischen Kopplungskreis (31) mit den Rückhaltemitteln (25, 26) zugeordnet ist.

3. Vorrichtung nach Anspruch 1, dadurch gekennzeichnet, daß das Stößelelement einen Umschalter betätigt, der Rückhaltemitteln mit elektrischer oder elektromagnetischer Steuerung zugeordnet ist.

4. Vorrichtung nach Anspruch 1, dadurch gekennzeichnet, daß das Targetelement (21) zwischen der Masse (12) und dem Trägerelement (16) angeordnet ist und diesem in seinen Längsbewegungen folgen kann, wobei das Targetelement in Abstützung gegen eine Endwand (14) der Kammer innerhalb des Körpers in der unteren Stellung des Trägerelements (16) sich befindet und eine Ausnehmung (15) in dieser Endwand (14) ausgespart ist, um das Trägerelement und die Verriegelungsmittel (32-36) hiervon aufzunehmen, wobei das Stößelelement (30) in einem Hohlraum am Boden dieser Aussparung verschiebbar oder beweglich ist.

5. Vorrichtung nach Anspruch 4, dadurch gekennzeichnet, daß dieses Targetelement eine Scheibe (22) umfaßt, die aus einem Stöße gegen seine der Masse gegenüberstehende Fläche dämpfenden Material hergestellt ist.

6. Vorrichtung nach Anspruch 5, dadurch gekennzeichnet, daß das Trägerelement (16) an einer steifen Stange (17) befestigt ist, die mit dem nachgiebigen Kabel (3) außerhalb des Körpers (1) verbunden ist.

7. Vorrichtung nach Anspruch 1, dadurch gekennzeichnet, daß die Verriegelungsmittel des Trägerelements in unterer Stellung eine Stange (34), die in eine seitliche Nut (35) des Trägerelements (16) unter der Wirkung einer Feder (32) greifen kann sowie hydraulische Mittel umfassen, die vermittels des Kabels (3) gesteuert sind, um einen Gegendruck auszuüben, derart, daß die Stange aus dieser seitlichen Nut (35) freigegeben wird.

8. Vorrichtung nach Anspruch 6, dadurch gekennzeichnet, daß die steife Stange (17) entsprechend der Achse des Körpers (1) angeordnet ist, wobei die Masse (12) und das Targetelement (21) mit einer mittigen Ausnehmung zur Durchführung der Stange versehen sind.

9. Vorrichtung nach Anspruch 1, dadurch gekennzeichnet, daß die Mittel zum Halten der Masse (12) in Ladestellung ein bewegliches radial gleitverschiebliches Organ (25) sowie Mittel umfassen, die durch das Stößelelement (30) gesteuert sind, um das bewegliche Organ zwischen einer Stellung zum Eingriff gegen die Masse und einer Freigabestellung zu verschieben.

10. Vorrichtung nach Anspruch 9, dadurch gekennzeichnet, daß die Rückhaltemittel für die Masse (12) in Ladestellung Schwenkhaken (40) umfassen, die in der Längskammer (11) angeordnet und so ausgebildet sind, daß sie die Masse in Ladestellung halten und Mittel (42-44) umfassen, um diese Haken auf Abstand zu bringen und die Masse zu befreien, wobei diese axial oberhalb dieser Ladestellung der Masse angeordnet sind.

11. Vorrichtung nach den Ansprüchen 6 und 10, dadurch gekennzeichnet, daß die Mittel, um diese Haken (40) auf Abstand zu bringen, ein an der Stange (17) befestigtes und so angeordnetes Element umfassen, das auf das Stößelelement (30) gedrückt wird, wenn das Trägerelement (16) sich benachbart seiner unteren Stellung befindet.

12. Vorrichtung nach einem der vorhergehenden Ansprüche, dadurch gekennzeichnet, daß die eindrückbaren Verankerungsmittel wenigstens einen Schuh (6), dessen in Kontakt mit der Wandung stehende Fläche mit vorstehenden Elementen (7) versehen ist sowie hydraulische Mittel (9) zum Verschieben jedes Verankerungsschuhs umfassen.

## Claims

1. Improved device designed to be lowered into a well at the end of a connecting element in order to generate acoustic waves by the impact of a mass (12) falling onto a target element (21) in contact with the wall of the well, comprising an elongated body (1) provided with a longitudinal chamber (11) where the mass may be displaced between a set position and a position of impact, a retractable means of anchorage (6, 9) to intermittently connect the target element with the wall of the well, a means of resetting comprising a supporting element (16) located under the mass (12) and where its movement between a lower position and an upper position permits the mass to be raised from its position of impact to its set position, and a displaceable means of retention ( 25, 26 ) used to retain the mass in its set position, characterised in that it comprises a flexible cable (3) to connect the supporting element (16) to a drive unit (5) located external to the well, a means ( 32-36 ) to lock the supporting element in the lower position, a pusher type element (30) designed to be pushed longitudinally when the supporting element (16) is in its lower position and a means to connect the displacement of the pusher type element (30) under the thrust of the supporting element (16) with that of the means of retention ( 25, 26 ) in order to initiate the fall of the mass.

2. Device in accordance with claim 1, characterised in that the pusher type element operates a control piston (30), this being associated with a hydraulic circuit (31) connecting with the means of retention (25, 26).

3. Device in accordance with claim 1, characterised in that the pusher type element operates a switch, this being associated with a means of retention controlled electrically or electromagnetically.

4. Device in accordance with claim 1, characterised in that the target element (21) is positioned between the mass (12) and the supporting element (16) and may follow this during its longitudinal displacements, the said target element being in contact with an end wall (14) of the internal chamber of the body in the lower position of the supporting element (16), a cavity (15) provided in the said end wall (14) to contain the supporting element and its means of locking (32-36), the pusher type element (30) being displaceable in a cavity (29) in the lower part of the said cavity.

5. Device in accordance with claim 4, characterised in that the said target element comprises a disc (22) made from a material capable of absorbing impacts against its face relative to the mass.

6. Device in accordance with claim 5, characterised in that the supporting element (16) is fixed to a rigid rod (17) wich is connected to the flexible cable (3) external to the body (1).

7. Device in accordance with claim 1, characterised in that the means of locking the supporting element in the lower position comprises a rod (34) capable of being engaged in a side groove (35) of the supporting element (16) under the action of a spring (32) and a hydraulic circuit controlled by means of the cable (3), this exerting a back pressure in order to disengage the rod from the said side groove (35).

8. Device in accordance with claim 6, characterised in that the rigid rod (17) is arranged along the axis of the body (1), the mass (12) and the target element (21) being provided with a central cavity for the passage of the rod.

9. Device in accordance with claim 1, characterised in that the means of retaining the mass (12) in the set position comprises a mobile component (25) capable of a radial sliding movement and a means controlled by the pusher type element ( 30 ) to displace the mobile component between a position of engagement against the mass and a position of disengagement.

10. Device in accordance with claim 1, characterised in that the means of retaining the mass (12) in the set position comprises pivoting latches (40) located in the longitudinal chamber (11) and designed to retain the mass in the set position and a means (42-44) of opening the said latches and releasing the mass, arranged axially over the said position for setting the mass.

11. Device in accordance with claims 6 and 10, characterised in that the means used two open the said latches (40) comprises an element fixed to the rod (17) and arranged to contact the pushet type element (30) when the supporting element ( 16 ) is in its lower position.

12. Device in accordance with one of the preceding claims, characterised in that the retractable means of anchorage comprises at least one pad (6), the face in contact with the wall being provided with projections (7) and a hydraulic circuit (9) used to displace each anchorage pad.

FIG.1

FIG.2

**FIG.3**

**FIG.4**

**FIG.5**